# EUROPÄISCHE PATENTSCHRIFT

(11) **EP 0 743 207 B1**
(45) Veröffentlichungstag und Bekanntmachung des Hinweises auf die Patenterteilung: **11.11.1998**
(21) Anmeldenummer: 96104970.7
(22) Anmeldetag: 28.03.1996
(51) Int. Cl.: B60J 10/06

(54) **Fahrzeugfenster mit einem Dichtungsprofil für eine Fensterscheibe**
Vehicle window comprising a sealing profile for a window glass
Fenêtre de véhicule comportant un profil d'étanchéité pour une vitre

(30) Priorität: 16.05.1995 DE 19517923
(43) Veröffentlichungstag der Anmeldung: 20.11.1996
(73) Patentinhaber: Bayerische Motoren Werke Aktiengesellschaft, 80788 München (DE)
(72) Erfinder: Macha, Ulrich, 85570 Markt Schwaben (DE); Sibinger, Harald, 80937 München (DE); Schmidtner, Johann, 85080 Gaimersheim (DE); Wolf, Peter, 83052 Bruckmühl-Götting (DE)

(56) Entgegenhaltungen:
- DE-A- 2 061 005
- DE-A- 2 827 372
- US-A- 4 888 929

## Beschreibung

Die Erfindung bezieht sich auf ein Fahrzeugfenster der im Oberbegriff des Patentanspruchs 1 genannten und als bekannt vorausgesetzten Art.

Bei einem aus der Praxis bekannten Personenkraftwagen liegt das im Querschnitt U-förmige Dichtungsprofil des Türfensterrahmens unmittelbar an dessen Schließblech an. Dieses weist zur Anordnung von Schweißpunkten mehrere nebeneinander liegende, muldenförmige Vertiefungen sowie mehrere Befestigungselemente für eine Zierblende auf, wobei die Befestigungselemente vom Schließblech des Türfensterrahmens abstehen. Durch die an dessen Schließblech vorhandenen Vertiefungen oder Erhebungen kann ein montiertes Dichtungsprofil über seine Längserstreckung wellenartig verlaufen oder ein sich an einer höhenverlagerbaren Fensterscheibe befindendes Dichtungsprofil wird durch die vorhandenen Erhebungen bei den Höhenverschiebungen der Fensterscheibe geringfügig zusammengeschoben. In beiden Fällen können längs des Dichtungsprofils kanalartige Hohlräume entstehen, durch welche die Schalldämmung im Bereich des Dichtungsprofils vermindert wird. Schließlich wirkt auch ein gewellt verlaufendes Dichtungsprofil unschön.

Aufgabe der Erfindung ist es daher, bei einem Fahrzeugfenster der im Oberbegriff des Patentanspruchs 1 genannten Art eine Einrichtung vorzusehen, durch die der Querschnitt des Dichtungsprofils über dessen gesamte Längserstreckung unabhängig von vorhandenen Vertiefungen oder Erhebungen beibehalten bleibt.

Zur Lösung der Aufgabe sind die im Patentanspruch 1 dargelegten Merkmale vorgesehen.

Durch das erfindungsgemäß zwischen einem starren oder beweglichen Karosserieteil und dem Dichtungsprofil vorgesehene Zwischenteil kann dieses so ausgebildet werden, daß vorhandene Vertiefungen oder Erhebungen durch Vorsprünge bzw. Ausnehmungen ausgeglichen werden, wobei das Zwischenteil an der dem Dichtungsprofil zugewandten Seite eine glatte Oberfläche aufweist. Hierdurch hat das Dichtungsprofil eine ebenflächige Aufnahme und damit über seine ganze Längserstreckung einen weitgehend gleichbleibenden Verlauf, wodurch auch eine verschiebbare Fensterscheibe exakt geführt wird. Ein erheblicher Vorteil des Zwischenteils besteht auch darin, daß durch die an diesem vorgesehene und in zugeordnete Hohlräume eingreifenden Vorsprünge die Schalldämmung im Bereich der Fensterscheibe wesentlich verbessert wird. Dabei erübrigt sich auch das bislang übliche Verschließen der Hohlräume durch ein knetbares Material. Schließlich ist das Zwischenteil in einfacher Weise und damit sehr kostengünstig herstellbar und hat ein geringes Gewicht.

Ein gemäß dem Merkmal des Patentanspruchs 2 aus einem Schaumstoff mit geschlossenzelliger Außenhaut gefertigtes Zwischenteil kann im Spritzgießverfahren kostengünstig hergestellt werden, hat eine wasserabweisende Oberfläche und kann schließlich auch bei konstruktionbedingten Änderungen des Karosserieteils in einfacher Weise angepaßt werden.

Nachdem ein Türfensterrahmen eines Personenkraftwagens aufgrund von Schweißpunkten und Befestigungselementen eine Anzahl von Vertiefungen und Erhebungen aufweist, wird zweckmäßigereweise zwischen dem Schließblech des Türfensterrahmens und dem Dichtungsprofil ein aus Schaumstoff bestehendes Zwischenteil vorgesehen, das sich über den gesamten Türfensterrahmen erstreckt. Dabei haben die Abschnitte des Zwischenteils an ihrer dem Schließblech des Türfensterrahmens zugewandten Rückseite eine Anzahl von im Abstand nebeneinander liegende Vorsprünge, die jeweils in eine Vertiefung des Türfensterrahmens eingreifen (Merkmale der Patentansprüche 3 und 4).

Damit am Karosserieteil vorhandene Erhebungen überbrückt werden können, sind an einem ersten Abschnitt des Zwischenteils mehrere fensterartige Ausnehmungen vorgesehen, welche die Erhebungen umgeben, während der zweite Abschnitt des Zwischenteils einen winkelförmigen Querschnitt hat, an dessen dachseitigem Winkelabschnitt im Abstand voneinander liegende Ausnehmungen vorgesehen sind, die jeweils eine Erhebung des Karosserieteils umgeben (Merkmale des Patentanspruchs 5).

Nachdem im Bereich der Türbrüstung sowie im Winkelbereich des Türfensterrahmens oftmals konstruktionsbedingte Vertiefungen vorhanden sind, können diese in einfacher Weise durch jeweils einen am Zwischenteil vorgesehenen Fortsatz ausgeglichen werden (Merkmale des Patentanspruchs 6).

Ein Ausführungsbeispiel der Erfindung ist in der Zeichnung dargestellt und wird im folgenden erläutert. Es zeigt:
- Figur 1: eine vordere, rechte Tür (Beifahrertür) eines Personenkraftwagens vom Fahrzeuginnenraum aus gesehen,
- Figur 2: einen Schnitt längs der Linie II-II in Figur 1 in größerer Darstellung,
- Figur 3: einen Schnitt längs der Linie III-III in Figur 1 in größerer Darstellung, jedoch ohne Türinnenblech,
- Figur 4: eine Einzeldarstellung des Zwischenteils,
- Figur 5: einen Schnitt längs der Linie V-V in Figur 4 in größerer Darstellung,
- Figur 6: einen Schnitt längs der Linie VI-VI in Figur 4 in größerer Darstellung.

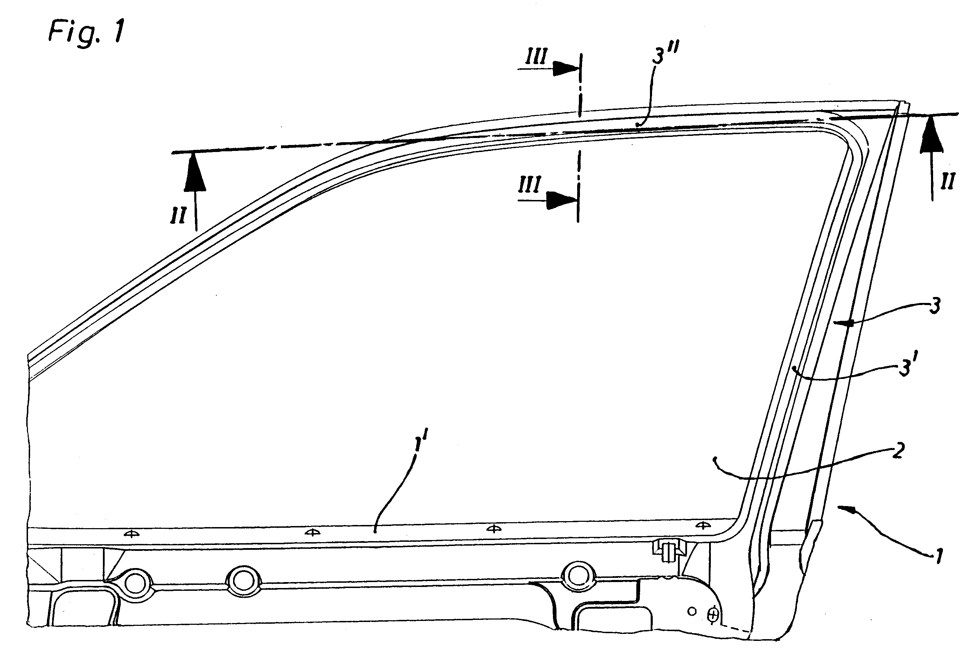

Die in Figur 1 dargestellte Fahrzeugtür 1 eines Personenkraftwagens hat einen zur Aufnahme einer höhenverlagerbaren Fensterscheibe 2 dienenden Türfensterrahmen 3. Dieser besteht aus einem etwa lotrecht verlaufenden, ersten Abschnitt 3' und einem waagrecht und schräg verlaufenden, zweiten Abschnitt 3'', der sich bis zum nicht dargestellten Spiegeldreieck erstreckt.

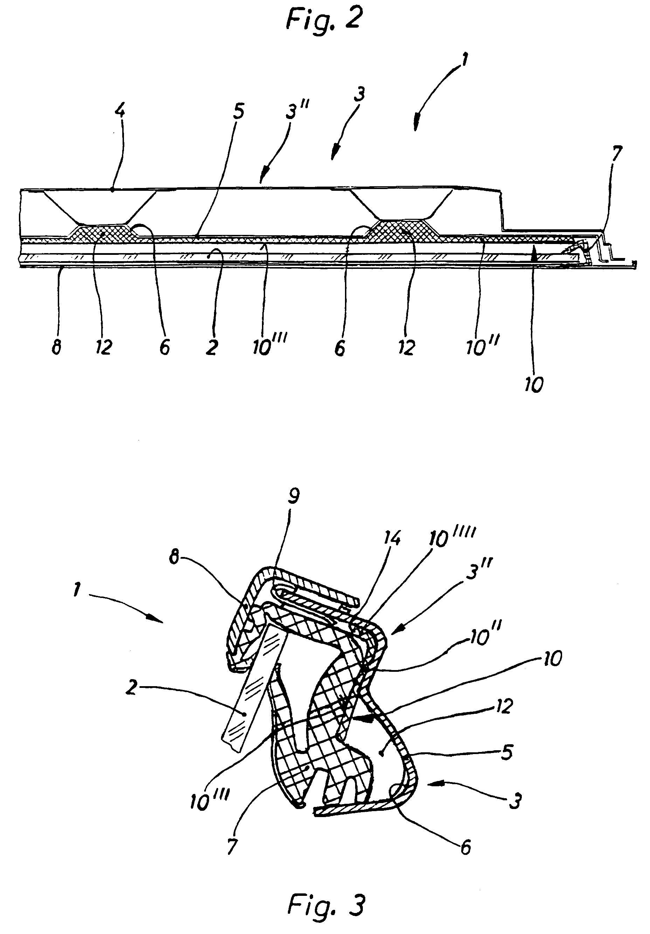

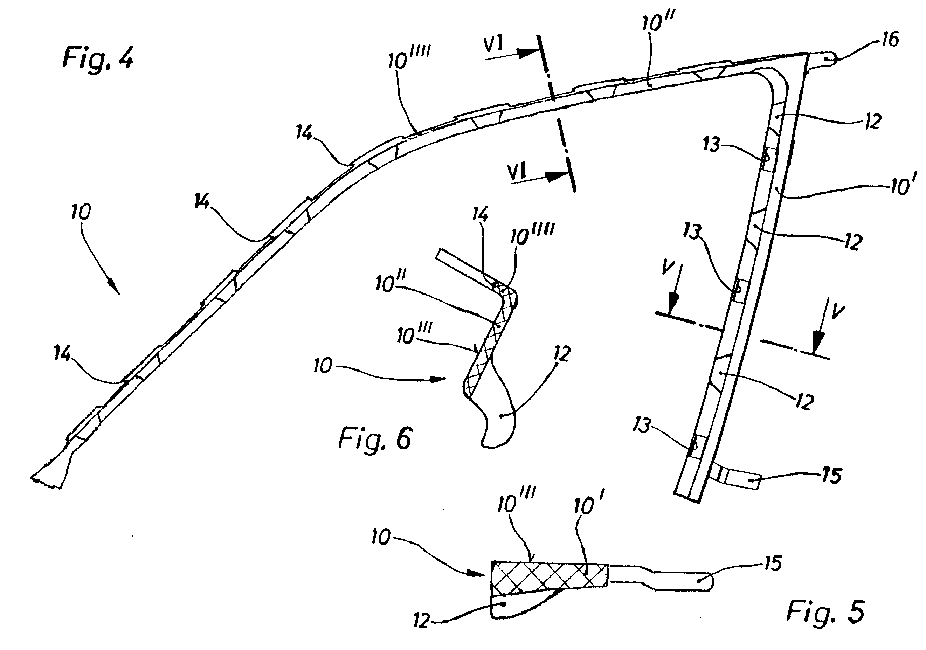

Wie in Figur 2 ersichtlich, hat der Türfensterrahmen 3 am ersten und zweiten Abschnitt 3' und 3'' ein dem Fahrzeuginnenraum zugewandtes Türinnenblech 4 und ein mit diesem verbundenes, der Fensterscheibe 2 zugewandtes Schließblech 5. Dieses ist für die Verbindung mit dem Türinnenblech 4 mit einer Anzahl von abschnittsweise nebeneinander liegenden muldenförmigen Vertiefungen 6 versehen. Zur Führung und Abdichtung der Fensterscheibe 2 ist ferner im Türfensterrahmen 3 innenseitig ein in Figur 3 dargestelltes Dichtungsprofil 7 mit U-förmigem Querschnitt befestigt. Dabei hat das Dichtungsprofil 7 zwei gegenüberliegende, etwa lotrecht verlaufende Abschnitte - von denen einer längs des Abschnitts 3' verläuft - und einen längs des Abschnitts 3'' des Türfensterrahmens 3 verlaufenden Querabschnitt. Zur Befestigung einer im Querschnitt winkelförmigen Zierleiste 8 (Figur 3) dient eine Anzahl abschnittsweise nebeneinander liegende, den zweiten Abschnitt 3'' des Türfensterrahmens 3 umgreifende Befestigungsklammern 9, die mit ihrem untenliegenden Schenkel an der Unterseite des zweiten Abschnitts 3'' des Türfensterrahmens 3 anlegen und dadurch gegenüber diesem als eine Erhebung wirken.

Damit das Dichtungsprofil 7 mit seiner dem Schließblech 5 zugewandten Rückseite und im Bereich der Befestigungsklammern 9 der Zierblende 8 glattflächig aufliegen kann, ist zwischen dem Schließblech 5 und dem Dichtungsprofil 7 ein Zwischenteil 10 angeordnet, das aus einem Schaumstoff mit geschlossenzelliger Außenhaut besteht. Dabei ist das Zwischenteil 10 auf seiner dem Dichtungsprofil 7 zugewandten Innenseite 10''' glattflächig gestaltet (Figur 3).

Wie in den Figuren 3, 4 und 6 ersichtlich, ist das Zwischenteil 10 winkelförmig gestaltet, wobei ein erster Abschnitt 10' längs des ersten Abschnitts 3' des Türfensterrahmens 3 verläuft, während der zweite Abschnitt 10'' des Zwischenteils 10 sich längs des zweiten Abschnitts 3'' des Türfensterrahmens 3 erstreckt und dabei bis zum (nicht dargestellten) Spiegeldreieck der Fahrzeugtür 1 verläuft. Der erste und der zweite Abschnitt 10' und 10'' des Zwischenteils 10 hat jeweils auf seiner dem Schließblech 5 zugewandten Rückseite mehrere, im Abstand voneinander liegende Vorsprünge 12 (Figur 3, 5 und 6), die jeweils in eine muldenförmige Vertiefung 6 des Schließblechs 5 eingreifen, wie die Figuren 2 und 3 zeigen. Ferner ist in Figur 5 zu ersehen, daß der erste Abschnitt 10' des Zwischenteils 10 einen etwa keilförmigen Querschnitt aufweist sowie mit mehreren fensterartigen Ausnehmungen 13 versehen ist (Figur 4), die am ersten Abschnitt 3' des Türfensterrahmens 3 vorhandene Erhebungen wie Schweißpunkte, Befestigungselemente oder dergleichen umgeben. Wie in Figur 6 ersichtlich, hat der zweite Abschnitt 10'' des Zwischenteils 10 einen winkelförmigen Querschnitt, dessen obenliegender, dem Fahrzeugdach zugewandter Winkelabschnitt 10'''' mehrere, im Abstand voneinander liegende Ausnehmungen 14 aufweist. Diese umgeben jeweils eine am zweiten Abschnitt 3'' des Türfensterrahmens 3 vorhandene Erhebung, welche durch die Befestigungsklammern 9 gebildet sind.

Da die Fahrzeugtür 1 im Bereich der Türbrüstung 1' sowie im Winkelbereich des Türfensterrahmens 3 oftmals fertigungsbedingt eine Vertiefung aufweist, steht vom unteren Endbereich des ersten Abschnitts 10' des Zwischenteils 10 ein in eine Vertiefung im Bereich der Türbrüstung 1' eingreifender, erster Fortsatz 15 ab. Darüber hinaus steht auch vom oberen Endbereich des ersten Abschnitts 10' des Zwischenteils 10 ein zweiter Fortsatz 16 ab, der in eine Vertiefung im Winkelbereich des Türfensterrahmens 3 eingreift.

Damit das Zwischenteil 10 bei Montage am Türfensterrahmen 3 lagegenau festlegbar ist, werden an der dem Schließblech 5 zugewandten Rückseite des Zwischenteils 10 etwa drei bis vier nicht dargestellte Klebepunkte vorgesehen, die sich zweckmäßigerweise am Endbereich des ersten und zweiten Abschnitts 10' und 10'' des Zwischenteils 10 und in dessen Winkelbereich befinden.

## Patentansprüche

1. Fahrzeugfenster mit einem Dichtungsprofil (7) für eine Fensterscheibe (2), das im Bereich eines Querschnitts einem starren oder beweglichen Karosserieteil (5) zugewandt ist, wobei dieses vom Soll-Querschnitt abweichende Vertiefungen (6) oder Erhebungen (9) hat, gekennzeichnet durch ein zwischen dem Karosserieteil (5) und dem Dichtungsprofil (7) liegendes Zwischenteil (10), das die Erhebungen (9) oder Vertiefungen (6) ausgleicht und auf seiner dem Dichtungsprofil zugewandten Innenseite (10''') weitgehend glattflächig gestaltet ist.

2. Fahrzeugfenster nach Anspruch 1, dadurch gekennzeichnet, daß das Zwischenteil (10) aus einem Schaumstoff mit geschlossenzelliger Außenhaut besteht.

3. Fahrzeugfenster nach Anspruch 1, dadurch gekennzeichnet, daß das Zwischenteil (10) im Türfensterrahmen (3) eines Personenkraftwagens angeordnet ist und sich über den gesamten Türfensterrahmen erstreckt.

4. Fahrzeugfenster nach Anspruch 3, dadurch gekennzeichnet, daß ein erster und ein zweiter Abschnitt (10' und 10'') des Zwischenteils (10) an der einem Fensterrahmenteil (5) zugewandten Rückseite mehrere, im Abstand voneinander liegende sowie jeweils in eine Vertiefung (6) des Fensterrahmenteils eingreifende Vorsprünge (12) aufweist.

5. Fahrzeugfenster nach Anspruch 3, dadurch gekennzeichnet, daß der erste Abschnitt (10') des Zwischenteils (10) einen im wesentlichen keilförmigen Querschnitt hat sowie mit mehreren fensterartigen Ausnehmungen (13) versehen ist, welche jeweils eine Erhebung des Fensterrahmenteils umgeben, während der zweite Abschnitt (10'') des Zwischenteils einen winkelförmigen Querschnitt aufweist, dessen dem Fahrzeugdach zugewandter Winkelabschnitt (10'''') mehrere, im Abstand voneinander liegende Ausnehmungen (14) aufweist, welche einer Erhebung (9) des Fensterrahmenteils zugeordnet sind.

6. Fahrzeugfenster nach Anspruch 3, dadurch gekennzeichnet, daß vom unteren und vom oberen Endbereich des ersten Abschnitts (10') des Zwischenteils (10) ein in eine Vertiefung im Bereich der Türbrüstung (1') eingreifender, erster Fortsatz (15) bzw. ein in eine Vertiefung im Winkelbereich des Türfensterrahmens (3) eingreifender, zweiter Fortsatz (16) absteht.

## Claims

1. A vehicle window comprising a sealing profile (7) for a window-pane (2), a cross-sectional region of the profile facing a rigid or movable body part (5) which has recesses (6) or raised portions (9) deviating from the set cross-section, characterised by an intermediate part (10) which is disposed between the body part (5) and the sealing profile (7) and compensates the raised portions (9) or recesses (6) and is substantially smooth and flat on its inside (10'''), which faces the sealing profile.

2. A vehicle window according to claim 1, characterised in that the intermediate part (10) is of foamed material with a closed-cell outer skin.

3. A vehicle window according to claim 1, characterised in that the intermediate part (10) is disposed in the window frame (3) of a passenger vehicle door and extends over the entire window frame.

4. A vehicle window according to claim 3, characterised in that a first and a second portion (10' and 10'') of the intermediate part (10) has a number of spaced-apart projections (12) on its rear side facing a window-frame part (5), each projection (12) engaging in a respective recess (6) in the window-frame part.

5. A vehicle window according to claim 3, characterised in that the first portion (10') of the intermediate part (10) has a substantially wedge-shaped cross-section and a number of window-like recesses (13) each surrounding a raised part of the window-frame part, whereas the second portion (10'') of the intermediate part has an angular cross-section and the angular part (10'''') thereof facing the vehicle roof has a number of spaced-apart recesses (14) associated with a raised part (9) of the window-frame part.

6. A vehicle window according to claim 3, characterised in that a first extension (15) engaging in a recess in the region of the door breastwork (1') and a second extension (16) engaging in a recess in the angular region of the door window-frame (3) extend respectively from the lower and from the upper end region of the first portion (10') of the intermediate part (10).

## Revendications

1. Fenêtre de véhicule comportant un profilé d'étanchéité (7) pour une vitre (2), dont la section est localement située en face d'une partie de carrosserie (5), fixe ou mobile, présentant des cavités (6) ou des saillies (9) s'écartant de la section théorique,
caractérisée en ce que,
entre la partie de carrosserie (5) et le profilé d'étanchéité (7), est montée une pièce intercalaire (10) qui compense les saillies (9) et les cavités (6) et sur son côté interne (10''') en regard du profilé, présente une surface plate.

2. Fenêtre selon la revendication 1,
caractérisée en ce que
la pièce intermédiaire (10) est constituée en une matière en mousse comportant un cuir extérieur composé de cellules fermées.

3. Fenêtre selon la revendication 1,
caractérisée en ce que
la pièce intercalaire (10) est montée dans le cadre (3) de la fenêtre d'une porte d'un véhicule de tourisme et couvre l'ensemble de ce cadre.

4. Fenêtre selon la revendication 3,
caractérisée en ce qu'
une première et une seconde partie (10') et (10'') de la pièce intercalaire (10) portent chacune, sur le côté arrière en regard d'une partie (5) du cadre de fenêtre plusieurs saillies (12) se faisant suite avec intervalles et en prise chacune dans une cavité (6) de la partie du cadre de fenêtre.

5. Fenêtre selon la revendication 3,
caractérisée en ce que
la partie (10') de la pièce intercalaire (10) a une section essentiellement en forme de coin et présente plusieurs évidements (13) du genre fenêtre dont chacun entoure une saillie de la partie du cadre de fenêtre, tandis que la deuxième partie (10'') de la pièce intercalaire a une section en forme d'angle dont la partie en angle (10'''') située en regard du toit du véhicule présente des évidements (14) espacés les uns des autres et auxquels sont associées des saillies (9) de la partie du cadre de fenêtre.

6. Fenêtre selon la revendication 3,
caractérisée en ce que
des zones d'extrémité inférieure et supérieure de la première partie (10') de la pièce intercalaire (10) portent respectivement un premier appendice (15) en prise dans une cavité située dans la zone de l'appui de fenêtre, et un second appendice (16) en prise dans une cavité de la zone en angle du cadre de fenêtre (3).
